# EUROPÄISCHE PATENTSCHRIFT

(11) **EP 3 341 266 B1**
(45) Veröffentlichungstag und Bekanntmachung des Hinweises auf die Patenterteilung: **05.08.2020**
(21) Anmeldenummer: 16741226.1
(22) Anmeldetag: 20.06.2016
(51) Int. Cl.: B62D 15/02, B60W 30/10, B60W 30/12

(54) **SPURHALTEASSISTENZVORRICHTUNG, KRAFTFAHRZEUG MIT EINER SOLCHEN SPURHALTEASSISTENZVORRICHTUNG SOWIE EIN VERFAHREN ZUR SPURHALTEÜBERWACHUNG**
LANE-KEEPING ASSISTANCE DEVICE, MOTOR VEHICLE HAVING SUCH A LANE-KEEPING ASSISTANCE DEVICE, AND A METHOD FOR MONITORING LANE-KEEPING
DISPOSITIF D'AIDE AU MAINTIEN DANS LA VOIE DE CIRCULATION, VÉHICULE AUTOMOBILE ÉQUIPÉ D'UN TEL DISPOSITIF D'AIDE AU MAINTIEN DANS LA VOIE DE CIRCULATION ET PROCÉDÉ DE SURVEILLANCE DE TRAJECTOIRE LATÉRALE

(30) Priorität: 25.08.2015 DE 102015216152
(43) Veröffentlichungstag der Anmeldung: 04.07.2018
(73) Patentinhaber: Conti Temic Microelectronic GmbH, 90411 Nürnberg (DE)
(72) Erfinder: FENDT, Günter Anton, 86529 Schrobenhausen (DE)
(86) Internationale Anmeldenummer: PCT/DE2016/200282
(87) Internationale Veröffentlichungsnummer: WO 2017/032366

(56) Entgegenhaltungen:
- DE-A1-102004 026 590
- DE-A1-102010 014 946
- DE-A1-102011 115 138
- DE-A1-102013 203 819
- US-A1- 2008 030 313
- US-A1- 2010 004 821
- US-A1- 2011 015 805
- US-A1- 2014 046 530

## Beschreibung

Die Erfindung betrifft eine Spurhalteassistenzvorrichtung zur Spurhalteüberwachung eines Kraftfahrzeugs nach dem Oberbegriff des Anspruchs 1. Ferner betrifft die Erfindung ein Kraftfahrzeug mit einer solchen Spurhalteassistenzvorrichtung sowie ein Verfahren zur Spurhalteüberwachung des Kraftfahrzeugs.

Spurhalteassistenzvorrichtungen, auch bekannt unter Lane Keeping Support (LKS), dienen zur Überwachung der Einhaltung der Spurführung durch den Fahrzeugführer. Sollte der Fahrzeugführer die Fahrspur unbewusst verlassen, wird eine Warnung ausgegeben. Ein unbewusstes Verlassen der Fahrspur kommt beispielsweise zustande, weil der Fahrer eingeschlafen oder einen kurzen Moment unaufmerksam ist. Jedoch gibt es auch Ausnahmefälle, bei denen der Fahrzeugführer beabsichtigt die eigene Fahrspur verlässt. So schneidet der Fahrzeugführer beispielsweise bewusst Kurven, um die in Kurven auf den Fahrzeugführer einwirkenden Querkräfte zu reduzieren.

Aus der Druckschrift WO 2011 067 252 A1, die wohl den nächstkommenden Stand der Technik darstellt, wird ein Verfahren zur Bestimmung einer Schnitttrajektorie vorgeschlagen, die ein Schneiden eines Kurvenabschnitts einer Fahrspur durch ein Fahrzeug ermöglicht. Dabei wird eine Information über den Kurvenabschnitt empfangen und der Kurvenabschnitt wird in mindestens ein Kurvensegment mit einer Segmentlänge und einer Startkrümmung unterteilt, wobei das Kurvensegment entweder ein Geradensegment ist oder ein Kreisbogensegment ist oder ein Kurvensegment ist, dessen Krümmung eine Funktion einer Bogenlänge des Kurvensegments ist. Es folgt ein Bestimmen einer Schnitttrajektorie aus dem mindestens einen Kurvensegment, sodass die Schnitttrajektorie in einem bestimmten Punkt des Kurvenabschnitts eine vorbestimmte Ablage in Bezug auf eine Mitte der Fahrspur aufweist.

Die Druckschrift US 2014/046530 A1 beschreibt ein System zum Steuern eines Fahrzeugs zum Durchführen eines Abbiegevorgangs. Eine Steuereinheit ist ausgebildet einen gewünschten Abbiegevorgang für das Fahrzeug zu identifizieren. Die Steuereinheit ermöglicht z. B. den Abbiegevorgang, wenn kein Fahrzeug in der Gegenrichtung annähert.

Aus der Druckschrift DE 10 2011 115 138 A1 ist ein Verfahren zum Betreiben eines Fahrerassistenzsystems eines Kraftfahrzeugs bekannt, wobei bei dem Verfahren zumindest ein für eine mögliche bevorstehende Kurvendurchfahrt kennzeichnender Parameter ermittelt wird. Zudem erfolgt ein Ermittelt, ob eine Kurvendurchfahrt des Kraftfahrzeugs bevorsteht, basierend auf dem zumindest einen ermittelten Parameter. Falls ermittelt wird, dass eine Kurvendurchfahrt des Kraftfahrzeugs bevorsteht, erfolgt ein ermittelt einer Zahl an weiteren, im Bereich der ermittelten Kurve befindlichen Verkehrsteilnehmern. Zudem erfolgt ein Ermitteln einer voraussichtlichen Durchfahrtstrajektorie des Kraftfahrzeugs durch die ermittelte Kurve in Abhängigkeit der Zahl an ermittelten weiteren Verkehrsteilnehmern.

Das Dokument US 2011/015805 A1 offenbart ein Verfahren für die Steuerung eines Fahrerassistenzsystems mit Sensoren für die Erfassung des Fahrzeugumfelds und einer Einrichtung für den Eingriff in Bordsysteme des Fahrzeugs in Abhängigkeit von Ausgangssignalen der Sensoren, wobei das Fahrerassistenzsystem mindestens den Verlauf eines von dem Fahrzeug befahrenen Fahrstreifens und die Position des Fahrzeugs in Bezug auf den Fahrstreifen erfasst und das Fahrzeug auf einer Trajektorie führt, wobei das Fahrerassistenzsystem die Trajektorie in Abhängigkeit von dem Fahrerwunsch festlegt.

Das Dokument US 2010/004821 A1 beschreibt eine Vorrichtung zum Halten eines Fahrzeugs in seiner Fahrspur, die bei einer Abweichung der Bewegungsbahn des Fahrzeugs von einer Soll-Bewegungsbahn mittels eines Lenkstellers ein Lenkmoment auf die Lenkung des Fahrzeugs aufprägt, wobei das Führungsverhalten der Vorrichtung im Falle einer Kurvenfahrt derart modifiziert wird, dass bei einer Abweichung der tatsächlichen Bewegungsbahn des Fahrzeugs von der Soll-Bewegungsbahn in Richtung der Kurveninnenseite geringere Lenkkräfte auf die Lenkung aufgeprägt werden als bei einer entsprechenden Abweichung in Richtung der Kurvenaußenseite.

Das Dokument DE102013203819A1 ist als nächstliegender Stand der Technik nach dem Oberbegriff des Anspruchs 1 zu sehen und beschreibt ein Fahrerassistenzsystem mit einer Spurhalteüberwachungsvorrichtung, die zumindest mit einer Fahrspur-Erkennungseinheit und einer Warn-und/oder Querführungseinheit verbunden ist, wobei die Spurhalteüberwachungsvorrichtung eine Warnung und/oder einen Querführungseingriff ausführt, wenn sich das Kraftfahrzeug zu nahe an eine definierte Grenze der Fahrspur annähert. Dabei erfasst und verwertet die Spurhalteüberwachungsvorrichtung Informationen über eine definierte Fahrsituation des eigenen Kraftfahrzeugs derart, dass eine aktuell vorgegebene Fahrspur durch Verschiebung mindestens einer definierten Grenze abhängig von der Fahrsituation veränderbar ist.

Aufgabe der Erfindung ist es, eine Spurhalteassistenzvorrichtung, ein Kraftfahrzeug sowie ein Verfahren anzugeben, welche dem Fahrzeugführer bei der Spurhalteüberwachung einen sicheren und zugleich toleranten Fahrspurverlauf ermöglichen.

Diese Aufgabe wird durch eine Spurhalteassistenzvorrichtung mit den Merkmalen des Anspruchs 1, durch ein Kraftfahrzeug mit den Merkmalen des Anspruchs 7 sowie durch ein Verfahren mit den Merkmalen des Anspruchs 8 gelöst. Bevorzugte oder vorteilhafte Ausführungsformen der Erfindung sind in den Unteransprüchen, der nachfolgenden Beschreibung und durch die Figuren dargelegt.

Es wird eine Spurhalteassistenzvorrichtung zur Spurhalteüberwachung eines Kraftfahrzeugs vorgeschlagen. Vorzugsweise umfasst die Spurhalteassistenzvorrichtung mindestens eine Fahrzeugkamera zur Aufnahme mindestens eines Bilds eines vorausliegenden Umgebungsbereichs des Kraftfahrzeugs. Beispielsweise ist die mindestens eine Fahrzeugkamera im Fahrzeuginnenraum hinter einer Scheibe in Fahrtrichtung des Kraftfahrzeugs anzuordnen.

Die Spurhalteassistenzvorrichtung umfasst eine Auswerteeinrichtung, welche ausgebildet ist, vorausliegende Fahrspuren des Kraftfahrzeugs zu ermitteln sowie mindestens eine Kurve der vorausliegenden Fahrspuren des Kraftfahrzeugs auszuwerten. Mit anderen Worten werden die bei einer Weiterfahrt des Kraftfahrzeugs bevorstehenden Fahrspuren sowie deren Kurven ausgewertet. Vorzugsweise ist die mindestens eine Fahrzeugkamera mit der Auswerteeinrichtung zur Übermittlung des mindestens einen Bildes verbunden, wobei die Auswerteeinrichtung insbesondere aus dem mindestens einen übermittelten Bild ausgebildet ist, die Fahrspuren und/oder die mindestens eine Kurve der Fahrspuren auszuwerten. Alternativ oder optional ergänzend kann vorgesehen sein, dass die Auswerteeinrichtung die vorausliegenden Fahrspuren und/oder die mindestens eine Kurve der Fahrspuren mittels einer GPS-Ortung sowie mittels Kartenmaterial auswertet.

Es ist durch die Auswerteeinrichtung ein Toleranzschwellwert vorgegeben, welcher die maximale Abweichungsgrenze einer Querabweichung des Kraftfahrzeugs von einer eigenen Fahrspur, somit der aktuell befindlichen Fahrspur des Kraftfahrzeugs festlegt. Zur Bestimmung einer Überschreitung des Toleranzschwellwerts wird beispielsweise die Relativposition des Kraftfahrzeugs zu mindestens einer Fahrspurlinie der eigenen Fahrspur, somit insbesondere das Annähern, Erreichen und/oder Überschreiten der Fahrspurlinie durch das Kraftfahrzeug ermittelt. Vorzugsweise ist ein Verlassen der eigenen Fahrspur durch die Spurhalteassistenzvorrichtung, im Speziellen durch die Auswerteeinrichtung erlaubt, sollte die Querabweichung als Absicht des Fahrzeugführers ausgewertet worden sein wie z. B. durch einen Blinkvorgang.

Insbesondere umfasst die Spurhalteassistenzvorrichtung eine Warneinrichtung zum Warnen des Fahrzeugführers. Vorzugsweise wird bei einer Überschreitung des Toleranzschwellwerts eine akustische Warnmeldung wie z. B. eine Sprachnachricht und/oder eine optische Warnmeldung wie z. B. das Anzeigen des Verlassens der eigenen Fahrspur über eine Anzeigeeinrichtung an den Fahrzeugführer ausgegeben. Alternativ oder optional ergänzend ist die Auswerteeinrichtung ausgebildet, in die Fahrzeugdynamik einzugreifen. Beispielsweise ist vorgesehen, einen automatischen Bremsvorgang oder einen Lenkvorgang des eigenen Kraftfahrzeugs einzuleiten, sodass ein weiteres Auffahren auf die benachbarte Fahrspur von der eigenen Fahrspur verhindert ist.

Erfindungsgemäß ist vorgesehen, dass die Auswerteeinrichtung ausgebildet ist, den Toleranzschwellwert derart anzupassen, dass das Schneiden der benachbarten Fahrspur von der eigenen Fahrspur in der mindestens einen ausgewerteten Kurve toleriert ist. Besonders bevorzugt erfolgt die Anpassung des Toleranzschwellwerts temporär, insbesondere ausschließlich während des Durchfahrens eines Kurvenbereichs. Unter dem Schneiden der benachbarten Fahrspur ist in diesem Zusammenhang ein Überschreiten der eigenen Fahrspur auf die benachbarte Fahrspur zu verstehen. Insbesondere ist die eigene Fahrspur überschritten, wenn das Kraftfahrzeug eine die zwei Fahrspuren abgrenzende Fahrspurbegrenzungslinie überfährt oder überfahren hat. Der angepasste Toleranzschwellwert erlaubt insbesondere nur mit einem Teilbereich des Kraftfahrzeugs, z. B. mit maximal 50 cm, von der eigenen Fahrspur auf die benachbarte Fahrspur abzuweichen, sodass ein weiteres Abkommen von der eigenen Fahrspur als unbeabsichtigtes Abweichen eingestuft wird.

Durch die erfindungsgemäße Spurhalteassistenzvorrichtung wird der Spurhaltebetrieb in Kurvenbereichen beschränkt. Die tolerantere Trajektorie in Kurvenbereichen erlaubt dem Fahrzeugführer des Kraftfahrzeugs ein beabsichtigtes Schneiden von Fahrspuren in Kurvenbereichen, sodass durch die hieraus resultierenden geringeren Quereinwirkungskräfte ein Komfortgewinn erlangt werden kann. Die Anpassung des Toleranzschwellwerts verhindert weiterhin eine Vielzahl an unerwünschten Alarmmeldungen bei beabsichtigten Schneiden von Fahrspuren. Auf diese Weise wird die Möglichkeit, dass sich der Fahrzeugführer gestört fühlt und aus diesem Grund die Spurhalteassistenzvorrichtung ausschaltet, zumindest reduziert. Folglich kann auch ein Sicherheitsgewinn für den Fahrzeugführer und die Verkehrsteilnehmer erlangt werden.

Bei einer besonders bevorzugten Ausführungsform ist die Auswerteeinrichtung ausgebildet, den Toleranzschwellwert in Abhängigkeit von der Kurvenrichtung anzupassen. Da bei einem Kurvenschneiden lediglich in Innenkurven die Querkräfte reduziert werden können, im Falle von Rechtsverkehr in Linkskurven, ist die Auswerteeinrichtung insbesondere ausgebildet, den Toleranzschwellwert in einer Innenkurve zu erhöhen, sodass das Schneiden der benachbarten Fahrspur in der Innenkurve durch den Toleranzschwellwert toleriert ist. Insbesondere erfolgt eine Anpassung, im Speziellen die Erhöhung des Toleranzschwellwerts ausgehend von einem festgelegten Soll-Schwellwert.

In Außenkurven, im Falle von Rechtsverkehr in Rechtskurven, kann das Schneiden der benachbarten Fahrspur in der Kurve hingegen keine Reduzierung der Querkräfte erzielen. Somit ist eine ausgewertete geschnittene benachbarte Fahrspur in einer Außenkurve unmittelbar auf ein ungewolltes Verlassen der eigenen Fahrspur zurückzuführen. Vor diesem Hintergrund ist die Auswerteeinrichtung insbesondere ausgebildet, den Toleranzschwellwert in einer Außenkurve zu erniedrigen, sodass das Schneiden der benachbarten Fahrspur in der Außenkurve durch den Toleranzschwellwert untersagt ist. Somit erfolgt insbesondere eine Erniedrigung des Toleranzschwellwerts ausgehend von dem festgelegten Soll-Schwellwert.

Vorzugsweise ist die Auswerteeinrichtung ausgebildet, Signale bezüglich Müdigkeit und/oder Unachtsamkeit des Fahrzeugführers auszuwerten. Die Signale werden beispielsweise durch die Erfassung eines ungewöhnlichen Lenkvorgangs oder durch das Loslassen des Lenkrades erzeugt. In einer möglichen Ausgestaltung der Erfindung ist bei Auswertung dieser Signale der Toleranzschwellwert durch die Auswerteeinrichtung derart angepasst, dass das Schneiden der benachbarten Fahrspur in der Kurve durch den Toleranzschwellwert untersagt ist.

Möglich ist auch im Rahmen der Erfindung, dass die Auswerteeinrichtung zur Auswertung von Gegenverkehr wie z.B. von PKWs oder LKWs auf der benachbarten Fahrspur ausgebildet ist. Bevorzugt ist der Toleranzschwellwert bei der Auswertung von Gegenverkehr auf der benachbarten Fahrspur durch die Auswerteeinrichtung derart angepasst, dass das Kurvenschneiden der benachbarten Fahrspur durch den Toleranzschwellwert untersagt ist. Auf diese Weise kann bei Abkommen auf die benachbarte Fahrspur auf eine potenzielle Kollision hingewiesen oder aktiv in die Fahrdynamik zur Verhinderung einer Kollision eingegriffen werden.

Erfindungsgemäß ist vorgesehen, dass der Toleranzschwellwert durch die Auswerteeinrichtung derart angepasst ist, dass das Schneiden der benachbarten Fahrspur durch den Toleranzschwellwert untersagt ist, wenn ein Gegenverkehr aufgrund einer nichteinsehbaren Kurve durch die Auswerteeinrichtung nicht auswertbar ist. Auf diese Weise soll bei Abkommen auf die benachbarte Fahrspur auf eine potenzielle Kollision mit dem nicht auszuschließenden Gegenverkehr hingewiesen werden.

In einer möglichen Umsetzung der Erfindung umfasst die Fahrerassistenzvorrichtung mindestens oder genau eine optische Sensoreinheit wie z. B. eine Fahrzeugkamera zur Erfassung des rückwärtigen Umgebungsbereichs des eigenen Kraftfahrzeugs. Vorzugsweise ist die Auswerteeinrichtung ausgebildet, aus dem von der optischen Sensoreinheit erfassten rückwärtigen Umgebungsbereich ein das eigene Kraftfahrzeuge überholendes Kraftfahrzeug auszuwerten. Erfindungsgemäß ist vorgesehen, dass der Toleranzschwellwert bei der Auswertung des überholenden Kraftfahrzeugs durch die Auswerteeinrichtung derart angepasst ist, dass das Schneiden der benachbarten Fahrspur durch den Toleranzschwellwert untersagt ist.

Einen weiteren Gegenstand der Erfindung betrifft ein Kraftfahrzeug mit einer Spurhalteassistenzvorrichtung zur Spurhalteüberwachung nach der vorhergehenden Beschreibung.

Ferner betrifft die Erfindung ein Verfahren zur Spurhalteüberwachung mit einer Spurhalteassistenzvorrichtung nach der vorhergehenden Beschreibung. In einem ersten Schritt wird mindestens eine Kurve von vorausliegenden Fahrspuren des Kraftfahrzeugs ausgewertet. Bei den vorausliegenden Fahrspuren handelt es sich um die eigene Fahrspur, somit die aktuell befindliche Fahrspur des eigenen Kraftfahrzeugs sowie um mindestens eine benachbarte Fahrspur zu der eigenen Fahrspur. Die Auswerteeinrichtung gibt einen Toleranzschwellwert vor, welcher die maximale Abweichungsgrenze der Querabweichung des Kraftfahrzeugs von der eigenen Fahrspur festlegt. In einem nächsten Schritt wird bei einer vorausliegenden Kurve der Toleranzschwellwert derart angepasst, dass das Schneiden der benachbarten Fahrspur der eigenen Fahrspur insbesondere in Abhängigkeit der Kurvenrichtung toleriert wird. Gemäß einer bevorzugten Weiterbildung wird das Schneiden der benachbarten Fahrspur ausschließlich für Innenkurven toleriert.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einer schematischen Darstellung ein Kraftfahrzeug mit einer Spurhalteassistenzvorrichtung,
- Figur 2: in einer Vogelperspektive das Kraftfahrzeug mit der Spurhalteassistenzvorrichtung aus Figur 1;
- Figur 3: exemplarisch die Anpassung eines Toleranzschwellwerts in Abhängigkeit von den in Figur 2 gezeigten Kurvenbereichen.

Einander entsprechende Teile sind in allen Figuren jeweils mit den gleichen Bezugszeichen versehen.

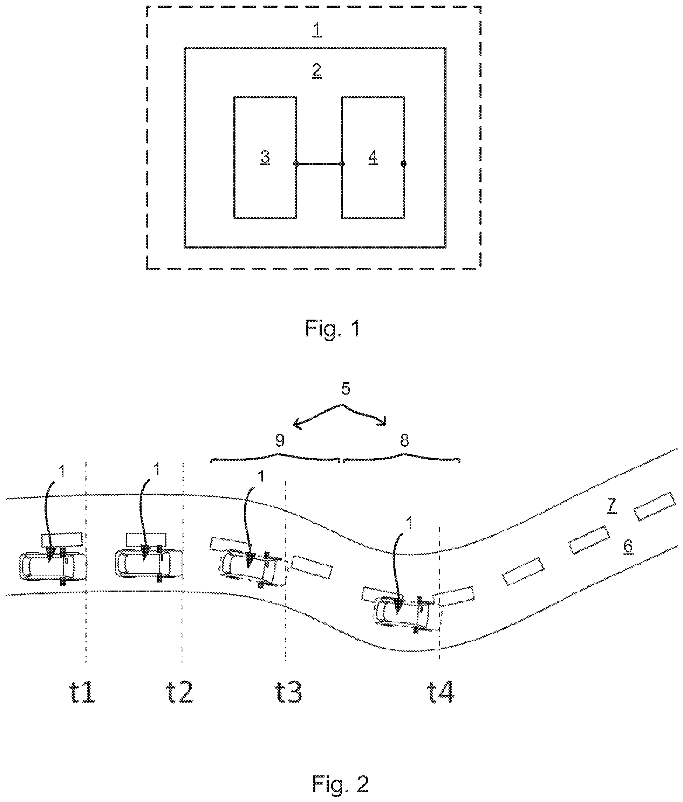

Figur 1 zeigt in einer schematischen Bockdarstellung ein Kraftfahrzeug 1 mit einer Spurhalteassistenzvorrichtung 2 zur Spurhalteüberwachung. Der Fahrzeugführer soll mittels der Spurhalteassistenzvorrichtung 2 aktiv und/oder passiv beim Führen des Kraftfahrzeugs 1 auf der eigenen Fahrspur 6 unterstützt werden.

Die Spurhalteassistenzvorrichtung 2 umfasst eine Auswerteeinrichtung 3, welche ausgebildet, mindestens eine Kurve 5 von vorausliegenden Fahrspuren 6, 7 des Kraftfahrzeugs 1 auszuwerten. Optional umfasst die Spurhalteassistenzvorrichtung 2 eine Fahrzeugkamera 4, welche zur Aufnahme mindestens eines Bildes des Fahrzeugvorfelds des Kraftfahrzeugs 1 ausgebildet ist. Die Fahrzeugkamera 4 ist zur Übermittlung des mindestens einen erfassten Bildes mit der Auswerteeinrichtung 3 verbunden, wobei die Auswerteeinrichtung 3 ausgebildet ist, aus dem von der Fahrzeugkamera 4 mindestens einen aufgenommen Bild mittels eines Algorithmus die Kurve der vorausliegenden Fahrspuren 6, 7 auszuwerten.

Es wird durch die Auswerteeinrichtung 3 ein Toleranzschwellwert TW vorgegeben, welcher die maximale Abweichungsgrenze einer Querabweichung des Kraftfahrzeugs 1 von der eigenen Fahrspur 6 festlegt. Somit ist eine mittels des Toleranzschwellwerts TW festgestellt, ob eine ungewollte Fahrspurüberschreitung des Kraftfahrzeugs 1 vorliegt. Beispielsweise legt der Toleranzschwellwert TW den erlaubten Grenzwert von einer abweichenden Relativposition des Kraftfahrzeugs 1 zu einer idealen Fahrspurlinie auf der eigenen Fahrspur 6 fest. Zur Bestimmung der idealen Fahrspurlinie wird beispielsweise der vorausliegende Fahrspurverlauf der eigenen Fahrspur 6 ausgewertet. Zur Bestimmung der Relativposition wird z. B. ein Abstand des Kraftfahrzeugs 1 zu einem Fahrspurrand oder einer Fahrspurbegrenzungslinie einer Fahrspur 6, 7 bestimmt.

Die Auswerteeinrichtung 3 ist ausgebildet, den Toleranzschwellwert TW derart anzupassen, dass das Schneiden der benachbarten Fahrspur 7 von der eigenen Fahrspur 6 in der mindestens einen ausgewerteten Kurve 5 toleriert ist. Somit ist durch den Toleranzschwellwert TW für die ausgewertete Kurve 5 festgelegt, inwieweit das Kraftfahrzeug 1 mit einem Teilbereich von der eigenen Fahrspur 6 auf die benachbarte Fahrspur 7 hineinragen darf. Bei der benachbarten Fahrspur 7 handelt es sich um eine unmittelbar an die eigene Fahrspur 6 angrenzende Fahrspur. Beispielweise ist die benachbarte Fahrspur 7 eine Gegenfahrspur oder eine Fahrspur mit der gleichen vorgegebenen Fahrtrichtung wie die eigene Fahrspur 6.

Das Schneiden der benachbarten Fahrspur 7 ist durch die Auswerteeinrichtung 3 ausschließlich für Innenkurven 8 toleriert und somit für Außenkurven 9 ausgeschlossen. Dies hat den Vorteil, dass dem Fahrzeugführer das beabsichtigte Schneiden der benachbarten Fahrspur 7 ohne eine Warnmeldung und somit die Reduzierung von Querkräften ermöglicht ist. Da das Schneiden der benachbarten Fahrspur 7 in Außenkurven 9 zu keiner Reduzierung der Querkräfte führen würde, erzielt die Unterscheidung zwischen Außen- und Innenkurven 8, 9 bzgl. der Fehlertoleranz weiterhin den Vorteil, dass das Schneiden in Außenkurven 9 unmittelbar als Fahrfehler ausgewertet und folglich hierauf durch die Spurhalteassistenzvorrichtung 2 frühzeitig reagiert werden kann.

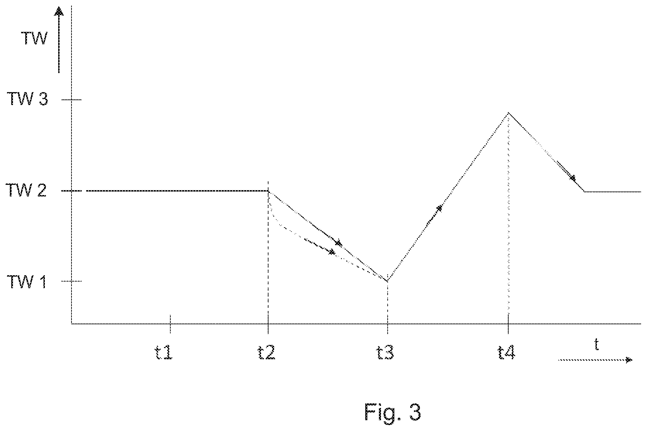

Zur näheren Erläuterung der erfindungsgemäßen Spurhalteassistenzvorrichtung 2 ist in Figur 2 in einer Vogelperspektive das Durchfahren einer Außen- und Innenkurve 8, 9 auf der eigenen Fahrspur 6 durch das eigene Kraftfahrzeug 1 dargestellt. Zwischen dem Zeitpunkt t1 und t2 befindet sich das Kraftfahrzeug 1 auf einem geradlinig verlaufenden Fahrspurabschnitt der eigenen Fahrspur 6. In dem Zeitintervall t1 - t2 bleibt der Toleranzschwellwert TW unverändert, wie es auch in dem Diagramm der Figur 3 dargestellt ist. Zum Zeitpunkt t2 fährt das Kraftfahrzeug 1 in eine erste Kurve 5 ein. Da es sich bei der ersten Kurve 5 um eine Außenkurve 9 handelt, wird ab dem Zeitpunkt t2 der Toleranzschwellwert TW erniedrigt, sodass das Schneiden der benachbarten Fahrspur 7 in der Außenkurve 9 durch den Toleranzschwellwert TW untersagt ist. Wie in Figur 3 als mögliches Ausführungsbeispiel gezeigt, wird der Toleranzschwellwert TW bis zum Zeitpunkt t3 erniedrigt, wobei zum Zeitpunkt t3 das Kraftfahrzeug 1 bereits in die Außenkurve 9 eingefahren ist. Als beispielhafte Alternative kann ebenso vorgesehen sein, dass der Toleranzschwellwert TW bis zur Beendigung der Außenkurve 9 oder bereits vor dem Einfahren in die Außenkurve 9 auf einen Maximalwert TW1 erniedrigt wird.

Anschließend fährt das Kraftfahrzeug 1 in eine zweite Kurve 5 ein. Da es sich bei der zweiten Kurve 5 um eine Innenkurve 8 handelt, wird ab dem Zeitpunkt t3 der Toleranzschwellwert TW erhöht, sodass das Schneiden der benachbarten Fahrspur 7 in der Innenkurve 8 durch den Toleranzschwellwert TW toleriert ist. Wie in Figur 3 als mögliches Ausführungsbeispiel gezeigt, wird der Toleranzschwellwert TW bis zum Zeitpunkt t4 erhöht, wobei das Kraftfahrzeug 1 zum Zeitpunkt t4 bereits in die Innenkurve 8 eingefahren ist. Auch hier kann als beispielhafte Alternative vorgesehen sein, dass der Toleranzschwellwert TW bis zur Beendigung der Innenkurve 8 oder bereits vor dem Einfahren in die Innenkurve 8 auf einen Maximalwert TW3 erhöht wird.

Im Anschluss fährt das Kraftfahrzeug 1 auf einem geradlinig verlaufenden Fahrspurbereich der eigenen Fahrspur 6. Wie in Figur 3 beispielhaft gezeigt, ist der Toleranzschwellwert TW auf einen vorbestimmten Soll-Schwellwert TW2 durch die Auswerteeinrichtung 3 angepasst ist.

Die in Figur 3 gezeigten Verlaufsformen bei der Anpassung des Toleranzschwellwerts TW sind rein exemplarisch zu verstehen. So kann die Anpassung des Toleranzschwellwerts TW neben dem gezeigten linearen und teilweise exponentiellen Verlauf ebenso beispielsweise stufenförmig erfolgen. Weiterhin ist die gezeigte Übereinstimmung der Maximalwerte TW1, TW2 des Toleranzschwellwerts TW in Figur 3 mit den Scheitelpunkten der Kurvenverläufe der Zeitpunkte t3, t4 als rein exemplarisch und somit als nicht einschränkend zu verstehen. So kann als eine mögliche Alternative vorgesehen sein, dass der Toleranzschwellwert TW zum Zeitpunkt des Einfahrens in die Kurve 5 auf den Maximalwert TW1, TW3 angepasst ist.

### Bezugszeichenliste

- 1: Kraftfahrzeug
- 2: Spurhalteassistenzvorrichtung
- 3: Auswerteeinrichtung
- 4: Fahrzeugkamera
- 5: Kurve
- 6: Eigene Fahrspur
- 7: Benachbarte Fahrspur
- 8: Innenkurve
- 9: Außenkurve
- TW: Toleranzschwellwert

## Patentansprüche

1. Spurhalteassistenzvorrichtung (2) zur Spurhalteüberwachung eines Kraftfahrzeugs (1),
mit einer Auswerteeinrichtung (3) zur Auswertung mindestens einer Kurve (5) von vorausliegenden Fahrspuren (6, 7) des Kraftfahrzeugs (1),
wobei durch die Auswerteeinrichtung (3) ein Toleranzschwellwert (TW) vorgegeben ist, welcher die maximale Abweichungsgrenze einer Querabweichung des Kraftfahrzeugs (1) von einer eigenen Fahrspur (6) festlegt,
wobei die Auswerteeinrichtung (3) ausgebildet ist, den Toleranzschwellwert (TW) derart anzupassen, dass das Schneiden einer benachbarten Fahrspur (7) von der eigenen Fahrspur (6) in der mindestens einen ausgewerteten Kurve (5) toleriert ist,
wobei der Toleranzschwellwert (TW) bei der Auswertung eines überholenden Kraftfahrzeugs derart angepasst ist, dass das Schneiden der benachbarten Fahrspur (7) durch den Toleranzschwellwert (TW) untersagt ist,
**dadurch gekennzeichnet, dass**
die Auswerteeinrichtung (3) ausgebildet ist, Gegenverkehr auf der benachbarten Fahrspur (7) auszuwerten, wobei der Toleranzschwellwert (TW) derart angepasst ist, dass das Schneiden der benachbarten Fahrspur (7) durch den Toleranzschwellwert (TW) untersagt ist, sollte ein Gegenverkehr aufgrund einer nichteinsehbaren Kurve durch die Auswerteeinrichtung (3) nicht ausgewertet können.

2. Spurhalteassistenzvorrichtung (2) nach Anspruch 1, **dadurch gekennzeichnet, dass** die Auswerteeinrichtung (3) ausgebildet ist, das Schneiden der benachbarten Fahrspur (7) in Abhängigkeit von der Kurvenrichtung zu tolerieren.

3. Spurhalteassistenzvorrichtung (2) nach Anspruch 1 oder 2, **dadurch gekennzeichnet, dass** die Auswerteeinrichtung (3) ausgebildet ist, den Toleranzschwellwert (TW) in einer Innenkurve (8) zu erhöhen, sodass das Schneiden der benachbarten Fahrspur (7) in der Innenkurve (8) toleriert ist.

4. Spurhalteassistenzvorrichtung (2) nach einem der vorhergehenden Ansprüche, **dadurch gekennzeichnet, dass** die Auswerteeinrichtung (3) ausgebildet ist, den Toleranzschwellwert (TW) in einer Außenkurve (9) zu erniedrigen, sodass das Schneiden der benachbarten Fahrspur (7) in der Außenkurve (9) durch den Toleranzschwellwert (TW) untersagt ist.

5. Spurhalteassistenzvorrichtung (2) nach einem der vorhergehenden Ansprüche, **dadurch gekennzeichnet, dass** der Toleranzschwellwert (TW) bei der Auswertung von Signalen bezüglich Müdigkeit und/oder Unachtsamkeit des Fahrzeugführers derart angepasst ist, dass das Schneiden der benachbarten Fahrspur (7) in der Kurve (5) durch den Toleranzschwellwert (TW) untersagt ist.

6. Spurhalteassistenzvorrichtung (2) nach einem der vorhergehenden Ansprüche, **dadurch gekennzeichnet, dass** die Auswerteeinrichtung (4) ausgebildet ist, Gegenverkehr auf der benachbarten Fahrspur (7) auszuwerten, wobei der Toleranzschwellwert (TW) bei der Erfassung von Gegenverkehr auf der benachbarten Fahrspur (7) derart angepasst ist, dass das Schneiden der benachbarten Fahrspur (7) durch den Toleranzschwellwert (TW) untersagt ist.

7. Kraftfahrzeug (1) mit einer Spurhalteassistenzvorrichtung (2) zur Spurhalteüberwachung nach einem der vorhergehenden Ansprüche.

8. Verfahren zur Spurhalteüberwachung mit einer Spurhalteassistenzvorrichtung (2), umfassend die Schritte:
a) Auswertung von mindestens einer Kurve (5) von vorausliegenden Fahrspuren (6, 7) des Kraftfahrzeugs (1);
b) Vorgeben eines Toleranzschwellwerts (TW), welcher die maximale Abweichungsgrenze einer Querabweichung des Kraftfahrzeugs (1) von einer eigenen Fahrspur (6) festlegt;
c) Anpassung des Toleranzschwellwerts (TW) derart, dass das Schneiden von einer benachbarten Fahrspur (7) der eigenen Fahrspur (6) in der mindestens einen ausgewerteten Kurve (5) toleriert wird;
d) Anpassung des Toleranzschwellwert (TW) bei der Auswertung eines überholenden Kraftfahrzeugs derart, dass das Schneiden der benachbarten Fahrspur (7) durch den Toleranzschwellwert (TW) untersagt wird,
e) Auswerten von Gegenverkehr auf der benachbarten Fahrspur (7), wobei der Toleranzschwellwert (TW) derart angepasst wird, dass das Schneiden der benachbarten Fahrspur (7) durch den Toleranzschwellwert (TW) untersagt wird, sollte ein Gegenverkehr aufgrund einer nichteinsehbaren Kurve nicht ausgewertet können.

## Claims

1. A lane-keeping assistant device (2) for monitoring the lane-keeping of a motor vehicle (1),
having an evaluation apparatus (3) for evaluating at least one bend (5) of lanes (6, 7) located in front of the motor vehicle (1),
wherein a tolerance threshold value (TW) is predefined by the evaluation apparatus (3), which specifies the maximum deviation limit of a transverse deviation of the motor vehicle (1) from an own lane (6),
wherein the evaluation apparatus (3) is configured to adapt the tolerance threshold value (TW) in such a way that the intersection of an adjacent lane (7) of the own lane (6) in the at least one evaluated bend (5) is tolerated,
wherein, when evaluating an overtaking motor vehicle, the tolerance threshold value (TW) is adapted in such a way that the intersection of the adjacent lane (7) is prohibited by the tolerance threshold value (TW), **characterized in that**
the evaluation apparatus (3) is configured to evaluate oncoming traffic in the adjacent lane (7), wherein the tolerance threshold value (TW) is adapted in such a way that the intersection of the adjacent lane (7) is prohibited by the tolerance threshold value (TW), should it not be possible for the evaluation apparatus (3) to evaluate oncoming traffic due to an invisible bend.

2. The lane-keeping assistant device (2) according to Claim 1, **characterized in that** the evaluation apparatus (3) is configured to tolerate the intersection of the adjacent lane (7) as a function of the bend direction.

3. The lane-keeping assistant device (2) according to Claim 1 or 2, **characterized in that** the evaluation apparatus (3) is configured to increase the tolerance threshold value (TW) in an inside bend (8) so that the intersection of the adjacent lane (7) in the inside bend (8) is tolerated.

4. The lane-keeping assistant device (2) according to any one of the preceding claims, **characterized in that** the evaluation apparatus (3) is configured to lower the tolerance threshold value (TW) in an outside bend (9) so that the intersection of the adjacent lane (7) in the outside bend (9) is prohibited by the tolerance threshold value (TW).

5. The lane-keeping assistant device (2) according to any one of the preceding claims, **characterized in that**, when evaluating signals concerning the tiredness and/or inattention of the driver, the tolerance threshold value (TW) is adapted in such a way that the intersection of the adjacent lane (7) in the bend (5) is prohibited by the tolerance threshold value (TW).

6. The lane-keeping assistant device (2) according to any one of the preceding claims, **characterized in that** the evaluation apparatus (4) is configured to evaluate oncoming traffic in the adjacent lane (7), wherein, when oncoming traffic is detected in the adjacent lane (7), the tolerance threshold value (TW) is adapted in such a way that the intersection of the adjacent lane (7) is prohibited by the tolerance threshold value (TW).

7. A motor vehicle (1) having a lane-keeping assistant device (2) for monitoring lane-keeping according to any one of the preceding claims.

8. A method for monitoring lane-keeping with a lane-keeping assistant device (2), comprising the steps of:
a) evaluating at least one bend (5) of lanes (6, 7) located in front of the motor vehicle (1);
b) predefining a tolerance threshold value (TW) which specifies the maximum deviation limit of a transverse deviation of the motor vehicle (1) from an own lane (6) ;
c) adapting the tolerance threshold value (TW) in such a way that the intersection of an adjacent lane (7) of the own lane (6) in the at least one evaluated bend (5) is tolerated;
d) adapting the tolerance threshold value (TW), when evaluating an overtaking motor vehicle, in such a way that the intersection of the adjacent lane (7) is prohibited by the tolerance threshold value (TW);
e) evaluating oncoming traffic in the adjacent lane (7), wherein the tolerance threshold value (TW) is adapted in such a way that the intersection of the adjacent lane (7) is prohibited by the tolerance threshold value (TW), should it not be possible to evaluate oncoming traffic due to an invisible bend.

## Revendications

1. Dispositif d'aide au maintien dans la voie de circulation (2) destiné à surveiller le maintien dans la voie de circulation d'un véhicule automobile (1),
comprenant une unité d'évaluation (3) destinée à évaluer au moins une courbe (5) de voies de circulation à venir (6, 7) du véhicule automobile (1),
l'unité d'évaluation (3) prescrivant une valeur seuil de tolérance (TW), qui fixe la limite d'écart maximal d'un écart transversal du véhicule automobile (1) par rapport à une voie de circulation propre (6),
l'unité d'évaluation (3) étant configurée pour adapter la valeur seuil de tolérance (TW) de telle sorte que la coupure d'une voie de circulation voisine (7) de la voie de circulation propre (6) soit tolérée dans ladite au moins une courbe évaluée (5),
la valeur seuil de tolérance (TW) étant adaptée lors de l'évaluation d'un véhicule automobile dépassant de telle sorte que la coupure de la voie de circulation voisine (7) soit interdite par la valeur seuil de tolérance (TW), **caractérisé en ce que**
l'unité d'évaluation (3) est configurée pour évaluer le trafic en sens inverse sur la voie de circulation voisine (7), la valeur seuil de tolérance (TW) étant adaptée de telle sorte que la coupure de la voie de circulation voisine (7) soit interdite par la valeur seuil de tolérance (TW) si un trafic en sens inverse ne peut pas être évalué par l'unité d'évaluation (3) en raison d'une courbe non visible.

2. Dispositif d'aide au maintien dans la voie de circulation (2) selon la revendication 1, **caractérisé en ce que** l'unité d'évaluation (3) est configurée pour tolérer la coupure de la voie de circulation voisine (7) en fonction de la direction de la courbe.

3. Dispositif d'aide au maintien dans la voie de circulation (2) selon la revendication 1 ou 2, **caractérisé en ce que** l'unité d'évaluation (3) est configurée pour augmenter la valeur seuil de tolérance (TW) dans une courbe intérieure, de telle sorte que la coupure de la voie de circulation voisine (7) dans la courbe intérieure (8) soit tolérée.

4. Dispositif d'aide au maintien dans la voie de circulation (2) selon l'une quelconque des revendications précédentes, **caractérisé en ce que** l'unité d'évaluation (3) est configurée pour réduire la valeur seuil de tolérance (TW) dans une courbe extérieure (9), de telle sorte que la coupure de la voie de circulation voisine (7) dans la courbe extérieure (9) soit interdite par la valeur seuil de tolérance (TW).

5. Dispositif d'aide au maintien dans la voie de circulation (2) selon l'une quelconque des revendications précédentes, **caractérisé en ce que** la valeur seuil de tolérance (TW) est adaptée lors de l'évaluation de signaux relatifs à la fatigue et/ou à l'inattention du conducteur du véhicule de telle sorte que la coupure de la voie de circulation voisine (7) dans la courbe (5) soit interdite par la valeur seuil de tolérance (TW).

6. Dispositif d'aide au maintien dans la voie de circulation (2) selon l'une quelconque des revendications précédentes, **caractérisé en ce que** l'unité d'évaluation (4) est configurée pour évaluer le trafic en sens inverse dans la voie de circulation voisine (7), la valeur seuil de tolérance (TW) étant adaptée lors de la détection d'un trafic en sens inverse dans la voie de circulation voisine (7) de telle sorte que la coupure de la voie de circulation voisine (7) soit interdite par la valeur seuil de tolérance (TW).

7. Véhicule automobile (1) muni d'un dispositif d'aide au maintien dans la voie de circulation (2) destiné à surveiller le maintien dans la voie de circulation selon l'une quelconque des revendications précédentes.

8. Procédé de surveillance du maintien dans la voie de circulation avec un dispositif d'aide au maintien dans la voie de circulation (2), comprenant les étapes suivantes :
a) l'évaluation d'au moins une courbe (5) de voies de circulation à venir (6, 7) du véhicule automobile (1) ;
b) la prescription d'une valeur seuil de tolérance (TW), qui fixe la limite d'écart maximal d'un écart transversal du véhicule automobile (1) par rapport à une voie de circulation propre (6) ;
c) l'adaptation de la valeur seuil de tolérance (TW) de telle sorte que la coupure d'une voie de circulation voisine (7) de la voie de circulation propre (6) soit tolérée dans ladite au moins une courbe évaluée (5) ;
d) l'adaptation de la valeur seuil de tolérance (TW) lors de l'évaluation d'un véhicule automobile dépassant de telle sorte que la coupure de la voie de circulation voisine (7) soit interdite par la valeur seuil de tolérance (TW),
e) l'évaluation du trafic en sens inverse sur la voie de circulation voisine (7), la valeur seuil de tolérance (TW) étant adaptée de telle sorte que la coupure de la voie de circulation voisine (7) soit interdite par la valeur seuil de tolérance (TW) si un trafic en sens inverse ne peut pas être évalué en raison d'une courbe non visible.
